# EUROPÄISCHE PATENTSCHRIFT

(11) **EP 3 710 334 B1**
(45) Veröffentlichungstag und Bekanntmachung des Hinweises auf die Patenterteilung: **13.10.2021**
(21) Anmeldenummer: 18803903.6
(22) Anmeldetag: 08.11.2018
(51) Int. Cl.: B62D 1/183, B62D 1/184

(54) **LENKSÄULE FÜR EIN KRAFTFAHRZEUG**
STEERING COLUMN FOR A MOTOR VEHICLE
COLONNE DE DIRECTION POUR UN VÉHICULE AUTOMOBILE

(30) Priorität: 14.11.2017 DE 102017126705
(43) Veröffentlichungstag der Anmeldung: 23.09.2020
(73) Patentinhaber: thyssenkrupp Presta AG, 9492 Eschen (LI); thyssenkrupp AG, 45143 Essen (DE)
(72) Erfinder: KURZ, Hannes, 6800 Feldkirch (AT)
(74) Vertreter: thyssenkrupp Intellectual Property GmbH
(86) Internationale Anmeldenummer: PCT/EP2018/080583
(87) Internationale Veröffentlichungsnummer: WO 2019/096664

(56) Entgegenhaltungen:
- WO-A1-2011/063891
- WO-A1-2015/028803
- DE-A1-102010 036 891
- DE-A1-102011 056 351
- DE-A1-102012 109 079
- US-A1- 2015 375 771

## Beschreibung

Die Erfindung betrifft eine Lenksäule für ein Kraftfahrzeug, umfassend eine Stelleinheit mit einer in einem Mantelrohr um ihre Längsachse drehbar gelagerten Lenkwelle, eine mit der Karosserie des Kraftfahrzeugs verbindbare Trageinheit, in der die Stelleinheit aufnehmbar ist, eine Fixiereinrichtung, die umschaltbar ist zwischen einer Freigabestellung, in der die Stelleinheit relativ zur Trageinheit zur Verstellung verschiebbar freigegeben ist, und einer Fixierstellung, in der die Stelleinheit gegenüber der Trageinheit bis zum Erreichen einer vorgegebenen Lösekraft festgelegt ist, ein Stellelement, welches mit der Fixiereinrichtung gekoppelt ist und zur Umschaltung zwischen der Freigabestellung und der Fixierstellung eingerichtet ist, wobei das Stellelement zwischen unterschiedlichen Bedienstellungen verlagerbar ist:
- einer Verstell-Bedienstellung, in welcher die Fixiereinrichtung in die Freigabestellung umgeschaltet ist, wobei die Stelleinheit gegenüber der Trageinheit entlang eines Verstellwegs verschiebbar ist, wobei die Länge des Verstellweges mit einer Begrenzung begrenzt ist,
- einer Fixier-Bedienstellung, in welcher die Fixiereinrichtung in die Fixierstellung umgeschaltet ist, wobei die Stelleinheit gegenüber der Trageinheit nach Überschreiten einer vorbestimmten Lösekraft verschiebbar ist, wobei die Begrenzung des Verstellwegs aufgehoben ist,
   wobei das Stellelement zwischen unterschiedlichen Bedienstellungen verlagerbar ist:
- einer Verstell-Bedienstellung, in welcher die Fixiereinrichtung in die Freigabestellung umgeschaltet ist, wobei die Stelleinheit gegenüber der Trageinheit entlang eines Verstellwegs verschiebbar ist und die Länge des Verstellweges mit einer Begrenzung begrenzt ist, und
- einer Fixier-Bedienstellung, in welcher die Fixiereinrichtung in die Fixierstellung umgeschaltet ist, wobei die Stelleinheit gegenüber der Trageinheit nach Überschreiten einer vorbestimmten Lösekraft verschiebbar ist und die Begrenzung des Verstellwegs aufgehoben ist,
wobei das Stellelement weiter in eine Verstau-Bedienstellung verlagerbar ist, in welcher die Fixiereinrichtung in die Freigabestellung umgeschaltet ist und Stelleinheit gegenüber der Trageinheit verschiebbar ist, wobei die Begrenzung des Verstellwegs aufgehoben ist.

### Hintergrund

Verstellbare Lenksäulen können eine Stelleinheit und eine Trageinheit aufweisen. Die Trageinheit ist mit der Karosserie des Kraftfahrzeugs direkt oder indirekt verbindbar und nimmt die Stelleinheit auf. Es ist eine Fixiereinrichtung vorgesehen, die dazu dient, die Stelleinheit gegenüber der Trageinheit zu fixieren oder freizugeben, so dass zum Verstellen eine Relativverlagerung zwischen Stelleinheit und Trageinheit ermöglicht ist. Das Fixieren erfolgt beispielsweise mittels Klemmen. Wenn eine Verlagerung zwischen Stelleinheit und Trageinheit durch die Fixiereinrichtung freigegeben ist, kann zum Begrenzen der Verlagerung (Verstellung) ein fester Anschlag vorgesehen sein, der den Verstellweg zwischen Stelleinheit und Trageinheit begrenzt.

Bei verstellbaren Lenksäulen kann darüber hinaus ein Crashsystem vorgesehen sein, bei dem in einer fixierenden Stellung der Fixiereinrichtung ein Sperrhaken bzw. ein Arretierteil in eine Formschlussstruktur eines Crashelements eingreift. Aber auch andere Ausgestaltungen wurden für das Einkoppeln des Crashelements in den Kraftschluss zwischen Stelleinheit und Trageinheit vorgeschlagen.

Aus dem Dokument DE 10 2011 056 351 A1 ist eine Lenksäule mit einem Endanschlag bekannt, der mittels der Ansteuerung der Fixiereinrichtung in und außer Eingriff gebracht wird, so dass eine Begrenzung der Verlagerung zwischen Stelleinheit und Trageinheit bereitgestellt ist, wenn sich die Fixiereinrichtung in der Freigabeposition befindet. Bei der bekannten Lenksäule sind ein erstes und ein zweites Bauteil vorgesehen, wobei das zweite Bauteil, die Stelleinheit, in einer durch das erste Bauteil, die Trageinheit, hindurch gebildeten und von dem ersten Bauteil wenigstens teilweise umfassten Öffnung angeordnet ist. Zum Begrenzen der Verstellung zwischen dem ersten und dem zweiten Bauteil ist an dem zweiten Bauteil ein erster Anschlag gebildet, der mit einem zweiten Anschlag an einem Block zusammenwirkt. Der schwenkbar gelagerte Block ist mit einem Bedienhebel wirkverbunden. Bedienhebel und Block sind um eine gemeinsame Achse drehbar, sodass der an dem Block gebildete zweite Anschlag in einer Blockstellung mit dem ersten Anschlag kollidierbar und in einer weiteren Blockstellung mit dem ersten Anschlag nicht kollidierbar ist.

Aus der DE 10 2009 055 973 B3 ist eine weitere Lenksäule mit einem Endanschlag bekannt, der mittels der Ansteuerung der Fixiereinrichtung in und außer Eingriff gebracht wird, so dass eine Begrenzung der Verlagerung zwischen Stelleinheit und Trageinheit bereitgestellt ist, wenn sich die Fixiereinrichtung in der Freigabeposition befindet. Dies ist dadurch realisiert, dass ein als Bedienhebel ausgebildetes Stellelement Steuerflächen aufweist, die mit einem Anschlagkörper in Wirkverbindung stehen und den Anschlagkörper in der Freigabestellung der Fixiereinrichtung so in Position bringen, dass die Bewegung der Stelleinheit gegenüber der Trageinheit begrenzt ist.

Eine Lenksäule nach dem Oberbegriff des Anspruchs 1 ist aus der WO 2015/028803 A1 bekannt.

### Zusammenfassung

Aufgabe der Erfindung ist es, eine verbesserte Lenksäule für ein Kraftfahrzeug anzugeben, bei der eine Begrenzung eines Verstellwegs in einem Verstellbereich auf einfache und sichere Weise bereitgestellt ist, und bei der die Fixiereinrichtung in die Freigabestellung umschaltbar ist, wobei die Begrenzung des Verstellwegs aufgehoben ist, so dass die Stelleinheit gegenüber der Trageinheit in eine Verstau-Bedienstellung verschiebbar ist.

Diese Aufgabe wird gelöst durch eine Lenksäule nach dem unabhängigen Anspruch 1.

Es wird eine Lenksäule für ein Kraftfahrzeug vorgeschlagen, umfassend eine Stelleinheit mit einer in einem Mantelrohr um ihre Längsachse drehbar gelagerten Lenkwelle,
- eine mit der Karosserie des Kraftfahrzeugs verbindbare Trageinheit, in der die Stelleinheit aufnehmbar ist,
- eine Fixiereinrichtung, die umschaltbar ist, zwischen einer Freigabestellung, in der die Stelleinheit relativ zur Trageinheit zur Verstellung verschiebbar freigeben ist, und einer Fixierstellung, in der die Stelleinheit gegenüber der Trageinheit bis zum Erreichen einer vorgegebenen Lösekraft festgelegt ist,
- ein Stellelement, welches mit der Fixiereinrichtung gekoppelt ist und zur Umschaltung zwischen der Freigabestellung und der Fixierstellung eingerichtet ist,
   wobei das Stellelement zwischen unterschiedlichen Bedienstellungen verlagerbar ist:
      - einer Verstell-Bedienstellung, in welcher die Fixiereinrichtung in die Freigabestellung umgeschaltet ist, wobei die Stelleinheit gegenüber der Trageinheit entlang eines Verstellwegs verschiebbar ist, wobei die Länge des Verstellweges mit einer Begrenzung begrenzt ist,
      - einer Fixier-Bedienstellung, in welcher die Fixiereinrichtung in die Fixierstellung umgeschaltet ist, wobei die Stelleinheit gegenüber der Trageinheit nach Überschreiten einer vorbestimmten Lösekraft verschiebbar ist, wobei die Begrenzung des Verstellwegs aufgehoben ist,
   wobei das Stellelement weiter in eine Verstau-Bedienstellung verlagerbar ist, in welcher die Fixiereinrichtung in die Freigabestellung umgeschaltet ist und Stelleinheit gegenüber der Trageinheit verschiebbar ist, wobei die Begrenzung des Verstellwegs aufgehoben ist,
      die erfindungsgemäß gekennzeichnet ist durch
      - einen ersten Anschlag, der an der Stelleinheit angeordnet ist; und
      - ein schwenkbares Bauteil, welches an der Trageinheit angeordnet und mit dem Stellelement wirkverbunden ist, wobei das schwenkbare Bauteil beim Schwenken des Stellelements zwischen einer Begrenzungsstellung und einer Nichtbegrenzungsstellung verschwenkt wird und wobei das schwenkbare Bauteil
         - in der Begrenzungsstellung einen dem ersten Anschlag zugeordneten, zweiten Anschlag ausbildend mit dem ersten Anschlag kollidierbar ist und
         - in der Nichtbegrenzungsstellung mit dem ersten Anschlag unkollidierbar angeordnet ist, wobei
      - in der Verstau-Bedienstellung das schwenkbare Bauteil in der Nichtbegrenzungsstellung angeordnet ist,
      - in der Verstell-Bedienstellung das schwenkbare Bauteil in der Begrenzungsstellung angeordnet ist, und
      - in der Fixier-Bedienstellung das schwenkbare Bauteil in der Nichtbegrenzungsstellung angeordnet ist.

Das Stellelement ist weiter in eine Verstau-Bedienstellung verlagerbar, in welcher die Fixiereinrichtung in die Freigabestellung umgeschaltet ist und Stelleinheit gegen-über der Trageinheit verschiebbar ist, wobei die Begrenzung des Verstellwegs aufgehoben ist.

In der Verstell-Bedienstellung ist der Verstellweg mit einer Begrenzung begrenzt, so dass die Verstellung der Stelleinheit relativ zur Trageinheit innerhalb eines vorbestimmten Bereichs ermöglicht ist, dieser jedoch durch die vorgesehene Begrenzung limitiert ist, wobei die Begrenzung beispielsweise durch einen Anschlag bereitgestellt ist, der mit einem weiteren Anschlag zusammenwirkt und somit den Verstellweg begrenzt.

In der Verstau-Bedienstellung ist diese Begrenzung des Verstellwegs aufgehoben, so dass die Stelleinheit über den durch die Begrenzung begrenzten Verstellweg der Verstell-Bedienstellung hinaus verstellbar ist. Somit ist der mögliche Verstellweg der Stelleinheit in der Verstau-Bedienstellung größer als der mögliche Verstellweg in der Verstell-Bedienstellung.

In der erfindungsgemäßen Ausgestaltung umfasst die Lenksäule weiter
- einen ersten Anschlag , der an der Stelleinheit angeordnet ist;
- ein schwenkbares Bauteil, welches an der Trageinheit angeordnet und mit dem Stell-element wirkverbunden ist, wobei das schwenkbare Bauteil beim Schwenken des Stell-elements zwischen einer Begrenzungsstellung und einer Nichtbegrenzungsstellung verschwenkt wird und wobei das schwenkbare Bauteil
- in der Begrenzungsstellung einen dem ersten Anschlag zugeordneten, zweiten Anschlag ausbildend mit dem ersten Anschlag kollidierbar ist und
- in der Nichtbegrenzungsstellung mit dem ersten Anschlag unkollidierbar angeordnet ist, wobei
   - in der Verstau-Bedienstellung das schwenkbare Bauteil in der Nichtbegrenzungsstellung angeordnet ist, und
   - in der Verstell-Bedienstellung das schwenkbare Bauteil in der Begrenzungsstellung angeordnet ist, und
   - in der Fixier-Bedienstellung das schwenkbare Bauteil in der Nichtbegrenzungs-stellung angeordnet ist.

Die Fixiereinrichtung ist eingerichtet, die Relativlage zwischen der Trageinheit und Stelleinheit beispielsweise mittels einer Klemmung zu sichern.

Mithilfe der Relativverlagerung der Stelleinheit gegenüber der Trageinheit kann eine Längenverstellbarkeit für die Lenksäule bereitgestellt sein.

Mit dem ersten und dem zweiten Anschlag ist ein mechanischer Endanschlag bereitgestellt, welcher den Verstell- oder Einstellweg beim Verstellen der Lenksäule begrenzt.

Das Stellelement kann mit einem Hebelelement oder durch einen motorischen Antrieb gebildet sein, wobei das Hebelelement oder der motorische Antrieb mit der Fixiereinrichtung wirkverbunden ist. Der motorische Antrieb in Kombination mit der Fixiereinrichtung wird auch als elektro-mechanische Fixiereinrichtung oder als elektrische Klemmvorrichtung bezeichnet.

In der Verstau-Bedienstellung des Stellelements ist die Stelleinheit für eine Verlagerung in Richtung der Längsachse freigegeben, wobei die Fixiereinrichtung sich in der Freigabestellung befindet und das schwenkbare Bauteil in der Nichtbegrenzungsstellung, so dass die Bewegung der Stelleinheit nicht durch das schwenkbare Bauteil begrenzt wird.

Die Trageinheit kann als ein Außenmantel ausgeführt sein. Die Stelleinheit umfasst ein Mantelrohr, welches als Innenmantel ausgebildet sein kann, der in der als Außenmantel ausgebildeten Trageinheit verlagerbar, auch als teleskopierbar bezeichnet, aufgenommen ist.

Die Trageinheit kann eingerichtet sein, direkt oder indirekt unter Zwischenschaltung einer Konsole in einem Fahrzeug montiert zu werden.

Bevorzugt kann es vorgesehen sein, dass die Trageinheit verschwenkbar an einer Konsole festgelegt ist, wobei die Konsole mit der Karosserie des Kraftfahrzeugs verbindbar ist. Die verschwenkbare Anbringung der Trageinheit an der Konsole ermöglicht eine Höhenverstellung der Trageinheit und Stelleinheit relativ zur Konsole im Fall das sich die Fixiereinrichtung in der Freigabestellung befindet.

Die Verstau-Bedienstellung bildet in Ergänzung zu der Verstell-Bedienstellung und der Fixier-Bedienstellung eine weitere Bedienstellung, in der die Stelleinheit relativ zur Trageinheit verlagerbar ist, beispielsweise um die Stelleinheit so weit wie möglich in die Trageinheit hinein zu teleskopieren und diese zu verstauen. Die Verlagerung der Stelleinheit relativ zur Trageinheit in Richtung der Längsachse kann hierbei über einen Verlagerungsweg erfolgen, der größer ist als der durch den ersten und den zweiten Anschlag begrenzte Verlagerungsweg. Hierdurch kann die Anordnung insbesondere zusätzlich längenverkürzt werden, um ein Verstauen zu ermöglichen. Es kann vorgesehen sein, dass die Verstau-Bedienstellung, welche verschieden von der Verstell-und der Fixier-Bedienstellung ist, einstellbar oder erreichbar ist, indem das Stellelement aus der Fixier-Bedienstellung in die Verstell-Bedienstellung und dann über die Verstell-Bedienstellung hinaus in gleicher Schwenkrichtung verschwenkt wird um in die Verstau-Bedienstellung zu gelangen.

Im Fall einer Crashverlagerung kann eine Relativverlagerung zwischen der Stelleinheit und der Trageinheit erfolgen, wobei diese Verlagerung in Richtung der Längsachse über einen Crashverlagerungsweg erfolgen kann, der größer ist als der begrenzte Verlagerungsweg beim Verstellen der Anordnung, wenn dieser Verlagerungsweg durch den ersten und den zweiten Anschlag begrenzt ist. Hierbei kann ein Crashsystem bei der Anordnung vorgesehen sein, zum Beispiel mit einem Crashelement, welches beispielsweise als Biegelasche oder Biegereißlasche ausgeführt ist, wobei das Crashelement an der Stelleinheit angeordnet ist. Das Crashelement kann mit einem zugeordneten Arretierelement zusammenwirken, zum Beispiel einem Sperrhaken, welches zum Aktivieren mit dem Crashelement in Eingriff bringbar ist. Die hier vorgeschlagene Anordnung kann mit verschiedenen Crashsystemen kombiniert werden, die als solche in unterschiedlichen Ausgestaltungen bekannt sind.

Das schwenkbare Bauteil kann mit einem Bügelbauteil gebildet sein.

Bevorzugt kann es vorgesehen sein, dass das Bügelbauteil zumindest teilweise durch einen Kunststoff bedeckt ist, bevorzugt durch einen Kunststoff umspritzt ist. Somit lässt sich auf einfache Art und Weise eine Dämpfung realisieren, wenn der erste Anschlag mit dem zweiten Anschlag kollidiert. Das Bügelbauteil kann eine kreiszylindrische oder rechteckige Querschnittsfläche aufweisen.

Das schwenkbare Bauteil kann über eine Koppelstange mit dem Stellelement wirkverbunden sein. Über die Koppelstange wird die Schwenkbewegung des schwenkbaren Bauteils beim Bedienen des Stellelements bewirkt. Die Koppelstange kann endseitig jeweils drehbar gelagert sein, also beispielsweise an dem Stellelement und dem schwenkbaren Bauteil.

Eine erste Drehachse für eine drehbare Lagerung der Koppelstange an dem Stellelement und eine zweite Drehachse für die Verlagerung des Stellelements zwischen Bedienstellungen können zueinander axial versetzt sein. Die zweite Drehachse kann durch einen Klemmbolzen, der drehfest mit dem Stellelement gekoppelt ist, gebildet sein.

Eine dritte Drehachse für eine drehbare Lagerung der Koppelstange an dem schwenkbaren Bauteil und eine vierte Drehachse zur schwenkbaren Lagerung des schwenkbaren Bauteils zwischen der Begrenzungsstellung und der Nichtbegrenzungsstellung können zueinander beabstandet sein. Bevorzugt ist die die dritte Drehachse und die vierte Drehachse in Richtung der Längsachse zueinander beabstandet.

Die zweite Drehachse für die Verlagerung des Stellelements den Bedienstellungen und die vierte Drehachse für das Verschwenken des schwenkbaren Bauteils zwischen der Begrenzungsstellung und der Nichtbegrenzungsstellung können zueinander beabstandet sein. Bevorzugt ist die die zweite Drehachse und die vierte Drehachse in Richtung der Längsachse zueinander beabstandet.

Ein Anschlagabschnitt des schwenkbaren Bauteils, an der der zweite Anschlag gebildet ist, kann in Richtung der Längsachse versetzt zur Drehachse für das Verschwenken des schwenkbaren Bauteils zwischen der Begrenzungsstellung und der Nichtbegrenzungsstellung angeordnet sein.

Das schwenkbare Bauteil kann an gegenüberliegenden Flanschen der Trageinheit jeweils drehbar gelagert sein. Das schwenkbare Bauteil kann hierbei auf gegenüberliegenden Seiten der Trageinheit drehbar gelagert sein. Weist das schwenkbare Bauteil einen U-förmigen Bügelabschnitt auf, an dem in möglichen Ausgestaltungen der zweite Anschlag gebildet sein kann, kann der U-förmige Bügelabschnitt zwischen den gegenüberliegenden Flanschen angeordnet sein. Bei dieser Ausführungsform ist der U-förmige Bügelabschnitt zwischen den gegenüberliegenden Lagerungen des schwenkbaren Bauteils angeordnet.

Das schwenkbare Bauteil kann an der Trageinheit die Stelleinheit übergreifend angeordnet sein. Das schwenkbare Bauteil, insbesondere bei der Ausführung als Bügelbauteil, erstreckt sich hierbei in Richtung quer zur Längsachse über die Breite Stelleinheit. Die Trageinheit kann dabei als Außenmantel ausgebildet sein, wobei der Außenmantel einen Schlitz aufweist, der sich in Richtung der Längsachse erstreckt, wobei der Schlitz mittels der Fixiereinrichtung verschmälerbar ist, so dass die Stelleinheit in der als Außenmantel ausgebildeten Trageinheit einklemmbar ist. Die Trageinheit ist somit als Klemmschelle ausgebildet. Das schwenkbare Bauteil übergreift in dieser Anordnung den Schlitz der als Außenmantel ausgebildeten Trageinheit.

Dem Stellelement kann ein elastisch verformbares Element zugeordnet sein, welches zusammendrückbar ist, um eine Verlagerung des Stellelements ausgehend von der Verstell-Bedienstellung in die Verstau- Bedienstellung zu erlauben. Mithilfe des elastisch verformbaren Elements, welches zum Beispiel mit einem Gummipuffer gebildet sein kann, kann eine Sicherung gegen ein unbeabsichtigtes oder selbsttätiges Verlagern des Stellelements in die Verstau-Bedienstellung bereitgestellt sein. Eine Lagerung des Stellelements kann bei dieser oder anderen Ausführungsformen mit Hubscheiben gebildet sein, die beispielsweise eine Nockenscheibe und eine zugeordnete Kulissenscheibe bilden. Insbesondere können zwei zusammenwirkende Hubscheiben vorgesehen sein. Bei der Ausführung mit den Hubscheiben kann vorgesehen sein, dass das elastisch verformbare Element mit einem elastisch verformbaren Abschnitt an einer der Hubscheiben angeordnet ist. Beim Verlagern des Stellelements in die Verstau-Bedienstellung wird das Element (zwangsweise) elastisch verformt.

Alternativ oder zusätzlich zu dem elastisch verformbaren Element kann eine Kulissenbahn oder ein Kulissenbahnabschnitt in einer der Hubscheiben vorgesehen sein, die ein Kraftspitze erforderlich machen, um zwischen der Verstell- und der Verstau-Bedienstellung hin und her zu wechseln. Somit kann eine Rastung bereitgestellt werden, um zwischen den Bedienpositionen zu wechseln und somit dem Kraftfahrzeugführer ein haptisches Gefühl zu vermitteln, in welcher Bedienstellung sich das Stellelement befindet.

### Beschreibung von Ausführungsbeispielen

Im Folgenden werden weitere Ausführungsbeispiele unter Bezugnahme auf Figuren einer Zeichnung näher erläutert. Hierbei zeigen:
- Figur 1: eine schematische perspektivische Darstellung einer Lenksäule;
- Figur 2: eine weitere schematische perspektivische Darstellung der Anordnung aus Figur 1;
- Figur 3: eine zusätzliche schematische perspektivische Darstellung der Lenksäule aus Figur 1;
- Figur 4: eine schematische perspektivische Detaildarstellung der Lenksäule aus Figur 1 ohne Konsole;
- Figur 5: eine Darstellung eines Querschnitts der Lenksäule aus Figur 1 in einer Fixier-Bedienstellung;
- Figur 6: eine Darstellung eines Querschnitts der Lenksäule aus Figur 1 in einer Verstell-Bedienstellung;
- Figur 7: eine Darstellung eines Querschnitts der Lenksäule aus Figur 1 in einer Verstau-Bedienstellung;
- Figur 8: eine Detaildarstellung zur Fixiereinrichtung mit zwei Hubscheiben, mit denen eine Kulissenscheibe und eine zugeordnete Nockenscheibe gebildet ist;
- Figur 9: eine Detaildarstellung der Lenksäule aus Figur 1 in der Fixier-Bedienstellung, wobei ein schwenkbares Bauteil in einer Nichtbegrenzungsstellung angeordnet ist;
- Figur 10: eine Detaildarstellung der Lenksäule aus Figur 1 in der Verstell-Bedienstellung, wobei das schwenkbare Bauteil in einer Begrenzungsstellung angeordnet ist;
- Figur 11: eine Detaildarstellung der Lenksäule aus Figur 1 in der Verstau-Bedienstellung, wobei das schwenkbare Bauteil in einer Nichtbegrenzungsstellung angeordnet ist;
- Figur 12: eine Darstellung eines Querschnitts einer Lenksäule in einer zweiten Ausführungsform in einer Fixier-Bedienstellung;
- Figur 13: eine Darstellung des Stellelements der Lenksäule gemäß Figur 12 .

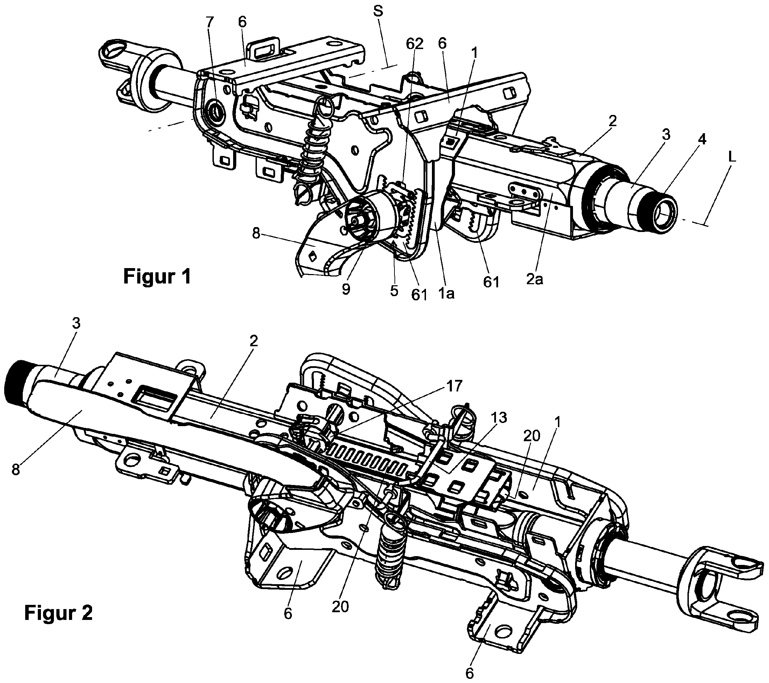

Die Figuren 1 bis 3 zeigen schematische perspektivische Darstellungen einer verstellbaren Lenksäule, bei der eine Trageinheit 1 vorgesehen ist, welches einen Außenmantel 1a aufweist. In der Trageinheit 1 ist eine Stelleinheit 2 verlagerbar aufgenommen, die ein Mantelrohr 2a aufweist. Die Stelleinheit 2 nimmt eine Lenkwelle 3 mit einem Lenkradanschluss 4 drehbar um die Längsachse L auf. Der Lenkradanschluss 4 ist mit einem nicht gezeigten Lenkrad verbindbar. Die Trageinheit 1 ist verschwenkbar um eine Schwenkachse S an einer Konsole 6 über eine Schwenklagerung 7 gehalten. Die Konsole 6 umfasst zwei zueinander beabstandete Seitenwangen 61, wobei die Trageinheit 1 zwischen den Seitenwangen 61 angeordnet ist. Die Seitenwangen 61 umfassen jeweils ein Langloch 62, das sich in einer Richtung orthogonal zur Längsachse L der Lenkwelle 3 erstreckt. Mittels der Langlöcher 62 ist eine Höhenverstellung der Trageinheit 1 und der Stelleinheit 2 relativ zur Konsole 6 realisiert, wobei die Höhenverstellung eine Verschwenkbewegung der Trageinheit 1 und der Stelleinheit um die Schwenkachse S relativ zur Konsole 6 darstellt.

Eine Fixiereinrichtung 5 ist vorgesehen, um die Trageinheit 1 und die Stelleinheit 2 in ihrer Relativlage zueinander zu fixieren oder freizugeben, derart, dass die Stelleinheit 2 entlang der Längsachse L relativ zur Trageinheit 1 verlagerbar ist, so dass eine Längenverstellbarkeit bereitgestellt ist. Die Fixiereinrichtung 5 umfasst einen Klemmbolzen 8a, der sich in eine Richtung quer zur Längsachse L erstreckt und durch die Langlöcher 62 der Seitenwangen 61 der Konsole 6 hindurchragt. Die Fixiereinrichtung 5 ist zwischen einer Freigabestellung, in der die Stelleinheit 2 relativ zur Trageinheit 1 zur Verstellung freigeben ist, und einer Fixierstellung, in der die Stelleinheit 2 gegenüber der Trageinheit 1 festgelegt ist, umschaltbar.

Ein bei der gezeigten Ausführungsform als Hebelelement ausgeführtes Stellelement 8 ist vorgesehen, um die Fixiereinrichtung 5 zu bedienen. Das Stellelement 8 ist drehfest mit dem Klemmbolzen 8a gekoppelt.

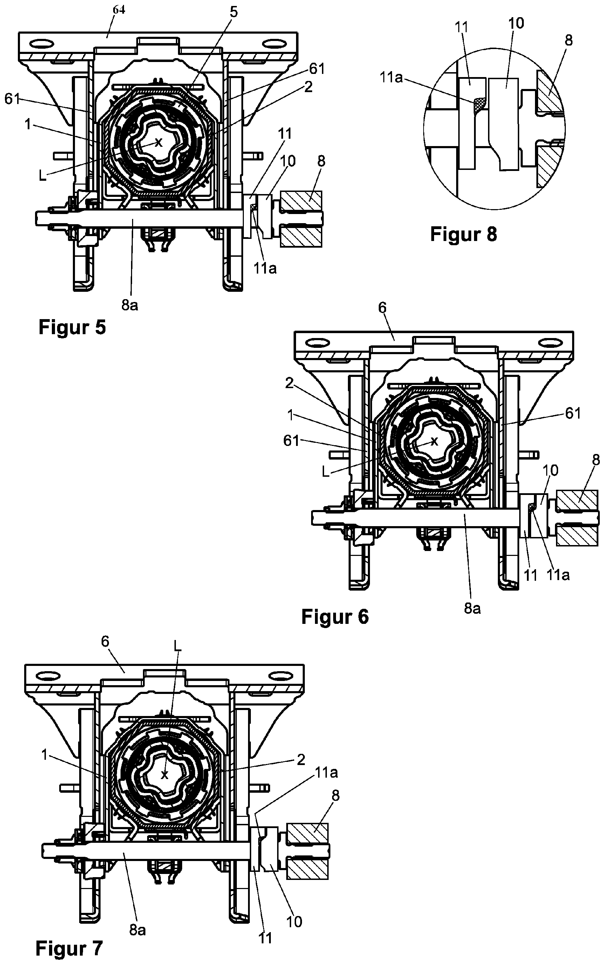

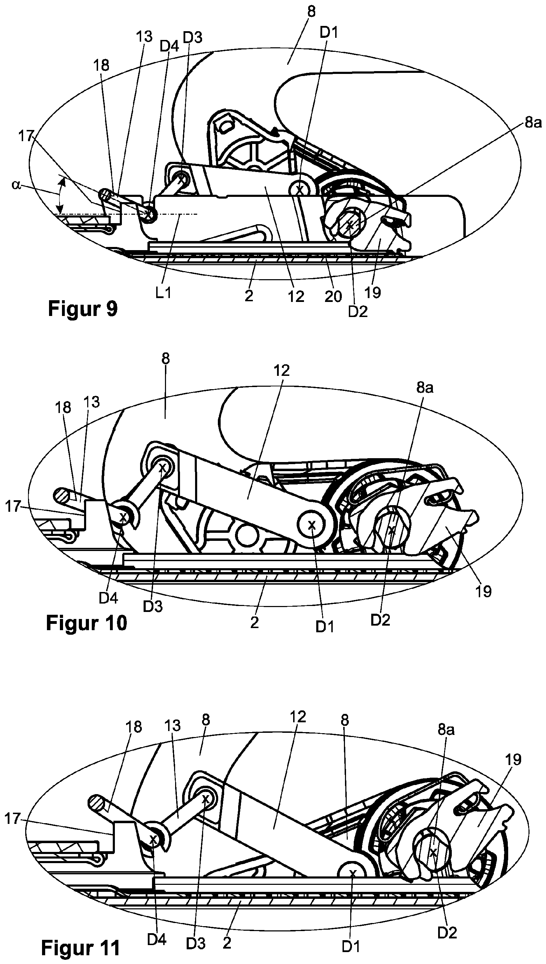

Das Stellelement 8 ist mit einer ersten, als Nockenscheibe ausgeführten Hubscheibe 10 der Fixiereinrichtung 5 drehfest gekoppelt, wobei die Fixiereinrichtung 5 eine zweite, als Kulissenscheibe mit Kulissenbahn ausgeführte Hubscheibe 11 aufweist, die mit der ersten Hubscheibe 10 zusammenwirkt, wobei bei einer Verdrehung der ersten Hubscheibe 10 relativ zur zweiten Hubscheibe 11 eine Hubbewegung erzeugt wird, bei der sich die zweite Hubscheibe 11 in Richtung der Drehachse der Klemmbolzens 8a relativ zur ersten Hubscheibe 10 verlagert. Die Drehachse des Klemmbolzens 8a entspricht der zweiten Drehachse D2 des Stell-elements 8. Die als Kulissenscheibe ausgebildete zweite Hubscheibe 11 ist unverdrehbar an der Konsole gehalten, in dem die zweite Hubscheibe 11 Vorsprünge aufweist, die in das Langloch 62 der einen Seitenwange 61 der Konsole 6 eingreifen. An der als Kulissenscheibe ausgebildeten zweiten Hubscheibe 11 ist ein elastisch verformbares Element 11a angeordnet. Dieses wird elastisch zusammengedrückt, wenn das Stellelement in die Verstau-Bedienstellung verlagert wird (vgl. Figuren 7 und 11). Das elastisch verformbare Element 11a kann dabei als Gummipuffer ausgebildet sein.

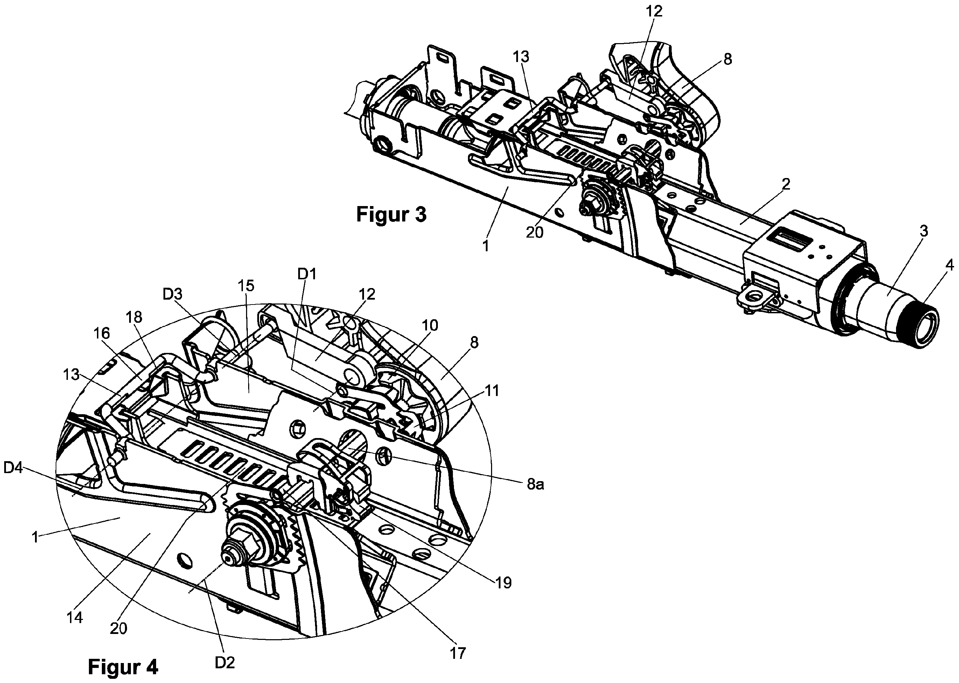

Das Stellelement 8 ist über eine Koppelstange 12 mit einem schwenkbaren Bauteil 13 wirkverbunden, welches bei der gezeigten Ausführungsform mit einem Bügelbauteil gebildet und seinerseits an Flanschen 14, 15 der Trageinheit 1 drehgelagert ist. Aufgrund der Wirkverbindung wird das schwenkbare Bauteil 13 in verschiedene Dreh- oder Schwenkstellungen verlagert, wenn das als Stellhebel ausgebildete Stellelement 8 geschwenkt wird. Die Koppelstange 12 ist endseitig jeweils drehgelagert, einerseits an dem Stellelement 8 um eine erste Drehachse D1 und andererseits an dem schwenkbaren Bauteil 13 um eine dritte Drehachse D3 (vgl. Figuren 3 und 4). Drehachsen D1, D3 dieser Lagerungen sind axial versetzt zur Drehachse D2 der Lagerung des Stellelements 8 einerseits und der Drehlagerung des schwenkbaren Bauteils 13 um die vierte Drehachse D4 andererseits.

Zwischen den Drehlagerungen an den Flanschen 14, 15 weist das schwenkbare Bauteil 13 einen U-förmigen Bügelabschnitt 16 auf. Ein erster Anschlag 17, der an der Stelleinheit 2 gebildet ist, wirkt mit einem zweiten Anschlag 18 am schwenkbaren Bauteil 13 zusammen, sodass ein Verlagerungsweg der Stelleinheit 2 relativ zu der Trageinheit 1 hierdurch in Abhängigkeit von der Stellung von Stellelement 8 und Bügelteil 13, begrenzt werden kann.

Ein insbesondere in Figur 4 gezeigter Sperr- oder Mitnehmerhaken 19 ist Teil eines Crashsystems der Anordnung und kann betätigt werden, um das Crashsystem zu aktivieren und zu deaktivieren. Das Crashsystem ist aktiviert, wenn der Sperr- oder Mitnehmerhaken 19 so geschwenkt ist, dass dieser mit einem der Rastöffnungen der Biegelasche 20 in Eingriff gebracht ist. Zum Deaktivieren wird der Sperrhaken 19 außer Eingriff gebracht.

Die Figuren 5, 6 und 7 zeigen eine Detaildarstellung der Fixiereinrichtung 5 im Querschnitt durch den Klemmbolzen 8a, wobei Stellelement 8 und schwenkbares Bauteil 13 in unterschiedlichen Stellungen angeordnet sind, wie dies die weiteren Figuren 9 bis 11 zeigen. Die Figur 5 entspricht der Stellung des schwenkbaren Bauteils 13 der Figur 9, wobei dies die Fixier-Bedienstellung darstellt, in der das schwenkbare Bauteil 13 in der Nichtbegrenzungsstellung angeordnet ist und die Fixiereinrichtung 5 in der Fixierstellung ist. Die Figur 6 entspricht der Stellung des schwenkbaren Bauteils 13 der Figur 10, wobei dies die Verstell-Bedienstellung darstellt, in der das das schwenkbare Bauteil 13 in der Begrenzungsstellung angeordnet ist und die Fixiereinrichtung 5 in der Freigabestellung ist. Die Figur 7 entspricht der Stellung des schwenkbaren Bauteils 13 der Figur 11, wobei dies die Verstau-Bedienstellung darstellt, in der das schwenkbare Bauteil 13 in der Nichtbegrenzungsstellung angeordnet ist und die Fixiereinrichtung 5 in der Freigabestellung ist, wobei die erste Hubscheibe 10 gegenüber der zweiten Hubscheibe 11 weiter verdreht ist und das elastische Element 11a zusammengedrückt ist.

Figur 9 zeigt das schwenkbare Bauteil 13 in einer Nichtbegrenzungsstellung, in welcher das schwenkbare Bauteil 13 den Verstell- oder Verschiebeweg für die Stelleinheit 2 nicht begrenzt, wenn dieses relativ zur Trageinheit 1 verlagerbar ist, so dass ein gegenüber dem in der Verstell-Bedienstellung möglichen Verstellweg vergrößerter Crashweg für die plastische Verformung eines Crashelements zur Verfügung steht, so dass im Crashfall eine kontrollierte Energieabsorption erfolgt, wenn eine Crashkraft in die Lenksäule und somit in die Stelleinheit eingetragen wird, die eine vorbestimmte Lösekraft überschreitet und so die Stelleinheit 2 trotz der Klemmung der Fixiereinrichtung (Fixierstellung) gegenüber der Trageinheit 1 verlagert. Die Figuren 9 und 11 zeigen somit eine erste und eine zweite Nichtbegrenzungsstellung des schwenkbaren Bauteils 13, derart, dass das schwenkbare Bauteil 13 in diesen Stellungen mit dem ersten Anschlag 17 der Stelleinheit 2 nicht kollidierbar, d.h. unkollidierbar ist. In diesen Stellungen begrenzt das schwenkbare Bauteil 13 also nicht einen Verstellweg der Stelleinheit. Während in der Situation nach Figur 9 die Stelleinheit 2 gegenüber der Trageinheit 1 und auch gegenüber der Konsole 6 relativ zueinander fixiert sind, nachdem ihre Relativlage zueinander eingestellt wurde (vgl. Figur 10). Auch in der Fixier-Bedienstellung in Figur 11 begrenzt das schwenkbare Bauteil 13 einen Verlagerungsweg, auch als Verstellweg bezeichnet, des ersten Anschlags 17 nicht, so dass hierdurch zum Beispiel die Möglichkeit gegeben ist, die Stelleinheit 2 weiter einzuschieben als in der Verstell-Bedienstellung (Figur 10), in der sich die Fixiereinrichtung auch wie in der Verstau-Bedienstellung in der Freigabestellung befindet, jedoch das schwenkbare Bauteil 13 sich in der Begrenzungsstellung befindet, in der der erste Anschlag 17 mit dem zweiten Anschlag 18 der Stelleinheit 2 kollidierbar ist. Somit bietet die Verstau-Bedienstellung beispielsweise die Möglichkeit zum Verstauen der Stelleinheit 2 innerhalb der Trageinheit 1.

Das schwenkbare Bauteil 13 kann um einen Winkel α gegenüber der Längsachse L geneigt sein. In der Figur 9 ist zur verbesserten Darstellung eine Achse L1 dargestellt, die parallel zur Längsachse L ausgerichtet ist, wobei das schwenkbare Bauteil 13 gegenüber der Achse L1 um den Winkel α geneigt ist. Für den Wert des Winkels α ist es unerheblich, ob dieser sich zwischen dem schwenkbaren Bauteil 13 und der Längsachse L oder der Achse L1 aufspannt. In der Nichtbegrenzungsstellung ist der Wert des Winkels α grösser als der Wert des Winkels α in der Begrenzungsstellung des schwenkbaren Bauteils 13.

Zum Übergang in die Verstau-Bedienstellung ist beim Verlagern des Stellelements 8 die Gegenkraft des elastisch verformbaren Elements 11a zu überwinden, um dieses hierbei zu verformen, insbesondere zusammenzudrücken. Auf diese Weise kann eine Sicherung gegen ein unbeabsichtigtes oder selbsttätiges Verlagern des Stellelements 8 ausgehend von der Verstell- in die Verstau-Bedienstellung bereitgestellt sein.

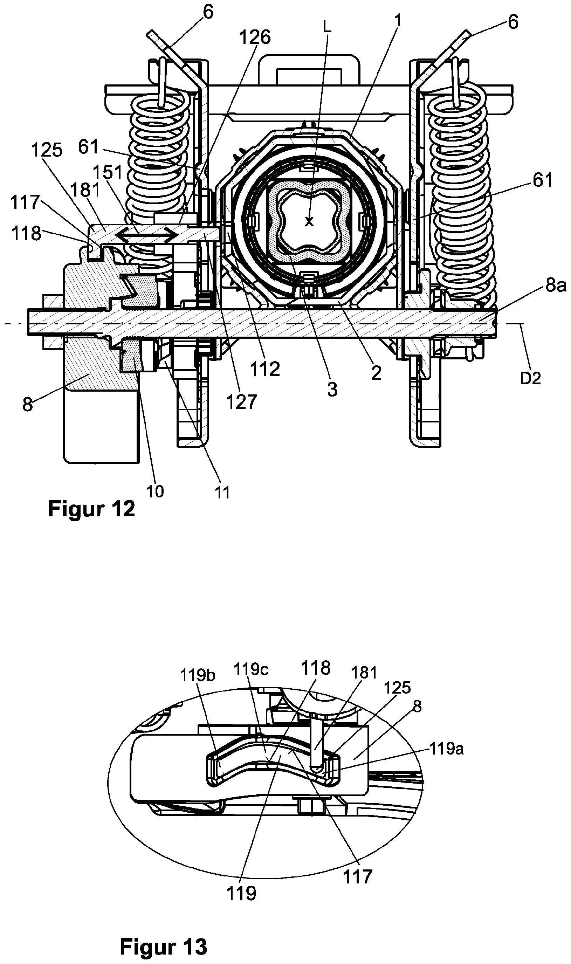

In den Figur 12 und 13 ist eine erfindungsgemäße Lenksäule in einer zweiten Ausführungsform dargestellt, wobei in der Figur 12 ein Querschnitt durch die Lenksäule der zweiten Ausführungsform dargestellt ist, wobei sich die Lenksäule in der Fixier-Bedienstellung befindet. Für die erfindungsgemäße Begrenzung ist ein Anschlagkörper 181 vorgesehen, welcher in diesem Ausführungsbeispiel zumindest bereichsweise als ein veschiebbarer Stift ausgebildet ist. Dieser ist verschiebbar in dem Führungskanal 126 der zweiten Hubscheibe 11 und damit an der Konsole 6 gelagert. Der Anschlagkörper 181 weist ein Ende 127 auf, mit dem er, wie weiter unten im Detail geschildert, in der Freigabestellung der Fixiereinrichtung die Verstellbarkeit der Stelleinheit 2 relativ zur Trageinheit 1 begrenzt. Der Anschlagkörper 181 kann somit eine Begrenzungsstellung und eine Nichtbegrenzungsstellung einnehmen. Das Stellelement 8 ist erfindungsgemäß in die Fixier-Bedienstellung, Verstell-Bedienstellung und in die Verstau-Bedienstellung umschaltbar.

Am gegenüberliegenden Ende des Endes 127 des Anschlagkörpers 181 ist ein Eingreifhaken 125 vorgesehen. Über diesen ist der Anschlagkörper 181 mit dem Stellelement 8 zwangsgekoppelt. Konkret ist dabei vorgesehen, dass der Anschlagkörper 181 in die von den Steuerflächen 117 und 118 begrenzte Nut 119 am Stellelement 8 permanent eingreift. Der Verlauf der Steuerflächen 117 und 118 ist wie in Figur 13 dargestellt ist, bezogen auf die zweite Drehachse D2 des Klemmbolzens 8a , so ausgebildet, dass, wenn sich der Eingriffshaken 125 in den Endpositionen 119a, 119b der Nut 119 befindet, der Anschlagkörper 181 sich in der Nichtbegrenzungsstellung befindet, und der, wenn sich der Eingriffshaken im mittleren Bereich 119c der Nut 119 befindet, der Anschlagkörper 181 in der Begrenzungsstellung ist. Der Anschlagkörper 181 nimmt die Begrenzungsstellung ein, wenn sich das Stellelement in der Verstell-Bedienstellung befindet. Der Eingriffshaken 125 befindet sich in der Endposition 119a, wenn das Stellelement 8 in der Fixier-Bedienstellung befindet. Der Eingriffshaken 125 befindet sich in der Endposition 119b, wenn das Stellelement 8 in der Verstau-Bedienstellung befindet. Der zwischen den Steuerflächen 117 und 118 geführte Anschlagkörper 8 führt bei einem Verschwenken des Stellelements 8 um die zweite Drehachse D2 zwangsweise eine Verschiebebewegung parallel zur Drehachse D2 aus, wie dies mit dem Pfeil 151 dargestellt ist.

Die Steuerfläche 117 sorgt dafür, dass der Anschlagkörper 181 bei einem Verschwenken des Stellelements 8 von der Verstell-Bedienstellung in die Verstau-Bedienstellung oder von der Verstell-Bedienstellung in die Fixier-Bedienstellung in Richtung hin zum Stellelement 8 gezogen wird. Durch diese Verschiebebewegung des Anschlagkörpers 181 wird dessen Ende 27, wie besonders gut in Figur 12 zu sehen, aus der kanalförmigen Ausnehmung 112 in der Stelleinheit 2 herausgezogen, so dass der Verstellweg der Stelleinheit 2 nicht begrenzt ist, da sich der Anschlagkörper 181 in der Nichtbegrenzungsstellung befindet. Die am Ende dieser Verschiebebewegung vom Anschlagkörper 181 in der Fixier-Bedienstellung des Stellelements erreichte Endstellung ist besonders gut in Figur 12 zu sehen. In dieser Bedienstellung, wie auch in der Verstau-Bedienstellung, steht der Anschlagkörper 181 nicht im Eingriff mit der Stelleinheit 2, so dass diese in der Verstau-Bedienstellung den Verstellweg der Stelleinheit 2 nicht begrenzt und in der Fixier-Bedienstellung im Fall eines Fahrzeugcrashs die Stelleinheit 2 relativ zur Trageinheit 1 verschoben werden kann, ohne dass der Anschlagkörper 181 noch einen Einfluss auf die Bewegung der Stelleinheit 2 hat. Der Energieabbau im Crashfall, also wenn eine vorbestimmte Lösekraft überschritten wird, wird aufgrund dieser Maßnahme durch den Anschlagkörper 181 nicht gestört bzw. nicht mit zusätzlichen unerwünschten Kraftspitzen belastet.

Die kanalförmige Ausnehmung 112 der Stelleinheit 2 ist bevorzugt als Langloch ausgebildet, welches sich in Richtung der Längsachse L erstreckt.

Die Steuerflächen 117, 118 sind so ausgebildet, dass der Anschlagkörper 181 bei einem Wechsel des Stellelements 8 von der Fixier-Bedienstellung über die Verstell-Bedienstellung in die Verstau-Bedienstellung eine Hubbewegung ausgehend von der Nichtbegrenzungsstellung über die Begrenzungsstellung in die Nichtbegrenzungsstellung ausführt.

Günstigerweise sind die Steuerflächen 117, 118 derart ausgebildet, dass beim Wechsel von der Fixier-Bedienstellung in die Verstell-Bedienstellung der Anschlagkörper 181 derart verschoben wird, dass er bereits dann in die Begrenzungsstellung, bei der er die Verstellung der Stelleinheit begrenzt, verschoben ist, wenn das Haltekraftniveau der Fixiereinrichtung 5 noch mehr als 50%, bevorzugt mehr als 80%, der Haltekraft in der Verriegelungsstellung beträgt. Damit wird erreicht, dass beim Öffnen des Klemmsystems, auch bei schneller und kraftvoller Verstellbetätigung der Lenksäule in der Verstell-Bedienstellung durch den Fahrer, die Stelleinheit 2 nicht über den vorgesehenen Verstellweg hinaus verschoben wird. Aufgrund der geometrisch festgelegten Zusammenhänge kann diese Auslegung einfach durch eine geometrische Festlegung erreicht werden.

## Patentansprüche

1. Lenksäule für ein Kraftfahrzeug, umfassend
- eine Stelleinheit (2) mit einer in einem Mantelrohr (2a) um ihre Längsachse (L) drehbar gelagerten Lenkwelle (3),
- eine mit der Karosserie des Kraftfahrzeugs verbindbare Trageinheit (1), in der die Stelleinheit (3) aufnehmbar ist,
- eine Fixiereinrichtung (5), die umschaltbar ist, zwischen einer Freigabestellung, in der die Stelleinheit (2) relativ zur Trageinheit (1) zur Verstellung verschiebbar freigeben ist, und einer Fixierstellung, in der die Stelleinheit (2) gegenüber der Trageinheit (1) bis zum Erreichen einer vorgegebenen Lösekraft festgelegt ist,
- ein Stellelement (8), welches mit der Fixiereinrichtung (5) gekoppelt ist und zur Umschaltung zwischen der Freigabestellung und der Fixierstellung eingerichtet ist,
wobei das Stellelement (8) zwischen unterschiedlichen Bedienstellungen verlagerbar ist:
- einer Verstell-Bedienstellung, in welcher die Fixiereinrichtung in die Freigabestellung umgeschaltet ist, wobei die Stelleinheit gegenüber der Trageinheit entlang eines Verstellwegs verschiebbar ist und die Länge des Verstellweges mit einer Begrenzung begrenzt ist, und
- einer Fixier-Bedienstellung, in welcher die Fixiereinrichtung in die Fixierstellung umgeschaltet ist, wobei die Stelleinheit gegenüber der Trageinheit nach Überschreiten einer vorbestimmten Lösekraft verschiebbar ist und die Begrenzung des Verstellwegs aufgehoben ist,
wobei das Stellelement (8) weiter in eine Verstau-Bedienstellung verlagerbar ist, in welcher die Fixiereinrichtung in die Freigabestellung umgeschaltet ist und Stelleinheit gegenüber der Trageinheit verschiebbar ist, wobei die Begrenzung des Verstellwegs aufgehoben ist,
**gekennzeichnet durch**
- einen ersten Anschlag (17), der an der Stelleinheit (2) angeordnet ist; und
- ein schwenkbares Bauteil (13), welches an der Trageinheit (1) angeordnet und mit dem Stellelement (8) wirkverbunden ist, wobei das schwenkbare Bauteil (13) beim Schwenken des Stellelements (8) zwischen einer Begrenzungsstellung und einer Nichtbegrenzungsstellung verschwenkt wird und wobei das schwenkbare Bauteil (13)
- in der Begrenzungsstellung einen dem ersten Anschlag (17) zugeordneten, zweiten Anschlag (18) ausbildend mit dem ersten Anschlag (17) kollidierbar ist und
- in der Nichtbegrenzungsstellung mit dem ersten Anschlag (17) unkollidierbar angeordnet ist, wobei
- in der Verstau-Bedienstellung das schwenkbare Bauteil (13) in der Nichtbegrenzungsstellung angeordnet ist,
- in der Verstell-Bedienstellung das schwenkbare Bauteil (13) in der Begrenzungsstellung angeordnet ist, und
- in der Fixier-Bedienstellung das schwenkbare Bauteil (13) in der Nichtbegrenzungsstellung angeordnet ist.

2. Lenksäule nach Anspruch 1, **dadurch gekennzeichnet**, das schwenkbare Bauteil (13) mit einem Bügelbauteil gebildet ist.

3. Lenksäule nach Anspruch 1 oder 2, **dadurch gekennzeichnet, dass** das schwenkbare Bauteil (13) in der Nichtbegrenzungsstellung für die Stelleinheit (2) einen Crashverlagerungsweg freigebend angeordnet ist.

4. Lenksäule nach mindestens einem der vorangehenden Ansprüche, **dadurch gekennzeichnet, dass** das schwenkbare Bauteil (13) über eine Koppelstange (12) mit dem Stellelement (8) wirkverbunden ist.

5. Lenksäule nach Anspruch 4, **dadurch gekennzeichnet, dass** eine erste Drehachse (D1) für eine drehbare Lagerung der Koppelstange (12) an dem Stellelement (8) und eine zweite Drehachse (D2) für die Verlagerung des Stellelements (8) zwischen der ersten und der zweiten Bedienstellung zueinander axial versetzt angeordnet sind.

6. Lenksäule nach Anspruch 4 oder 5, **dadurch gekennzeichnet, dass** eine dritte Drehachse für eine drehbare Lagerung der Koppelstange (12) an dem schwenkbare Bauteil (13) und eine vierte Drehachse zur schwenkbaren Lagerung des schwenkbaren Bauteils (13) zwischen der Begrenzungsstellung und der Nichtbegrenzungsstellung beabstandet angeordnet sind.

7. Lenksäule nach mindestens einem der vorangehenden Ansprüche, **dadurch gekennzeichnet, dass** die zweite Drehachse für die Verlagerung des Stellelements (8) zwischen den Bedienstellungen und die vierte Drehachse für das Verschwenken des schwenkbaren Bauteils (13) zwischen der Begrenzungsstellung und der Nichtbegrenzungsstellung zueinander beabstandet angeordnet sind.

8. Lenksäule nach mindestens einem der vorangehenden Ansprüche, **dadurch gekennzeichnet, dass** ein Anschlagabschnitt des schwenkbaren Bauteils (13), an der der zweite Anschlag (18) gebildet ist, in Richtung der Längsachse versetzt zur Drehachse für das Verschwenken des schwenkbaren Bauteils (13) zwischen der Begrenzungsstellung und der Nichtbegrenzungsstellung angeordnet ist.

9. Lenksäule nach mindestens einem der vorangehenden, **dadurch gekennzeichnet, dass** das schwenkbare Bauteil (13) an gegenüberliegenden Flanschen (14, 15) der Trageinheit (1) jeweils drehbar gelagert ist.

10. Lenksäule nach mindestens einem der vorangehenden Ansprüche, **dadurch gekennzeichnet, dass** die Fixiereinrichtung (5) ein elastisch verformbares Element (11a) aufweist, welches zusammendrückbar ist, um eine Verlagerung des Stellelements (8) in die dritte Bedienstellung zu erlauben.

## Claims

1. Steering column for a motor vehicle, comprising
- an adjusting unit (2) having a steering shaft (3) which is mounted in a casing tube (2a) so as to be rotatable about its longitudinal axis (L),
- a supporting unit (1) which can be connected to the body of the motor vehicle and in which the adjusting unit (3) can be received,
- a fixing device (5) which can be switched between a release position, in which the adjusting unit (2) is released so as to be displaceable relative to the supporting unit (1) for adjustment, and a fixing position, in which the adjusting unit (2) is fixed with respect to the supporting unit (1) until a predetermined release force has been attained,
- an adjusting element (8) which is coupled to the fixing device (5) and is designed for switching between the release position and the fixing position,
wherein the adjusting element (8) is displaceable between different operating positions:
- an adjusting operating position in which the fixing device is switched into the release position, wherein the adjusting unit is displaceable with respect to the supporting unit along an adjustment path, and the length of the adjustment path is limited by a limitation, and
- a fixing operating position in which the fixing device is switched into the fixing position, wherein the adjusting unit is displaceable with respect to the supporting unit after a predetermined release force has been exceeded, and the limitation of the adjustment path is cancelled,
wherein the adjusting element (8) is further displaceable into a stowage operating position in which the fixing device is switched into the release position and the adjusting unit is displaceable with respect to the supporting unit, wherein the limitation of the adjustment path is cancelled,
**characterized by**
- a first stop (17) which is arranged on the adjusting unit (2); and
- a pivotable component (13) which is arranged on the supporting unit (1) and is operatively connected to the adjusting element (8), wherein the pivotable component (13) is pivoted during the pivoting movement of the adjusting element (8) between a limiting position and a non-limiting position, and wherein the pivotable component (13)
- in the limiting position, is able to collide with the first stop (17) while forming a second stop (18) assigned to the first stop (17), and
- in the non-limiting position, is arranged so as to not be able to collide with the first stop (17), wherein
- in the stowage operating position, the pivotable component (13) is arranged in the non-limiting position,
- in the adjusting operating position, the pivotable component (13) is arranged in the limiting position, and
- in the fixing operating position, the pivotable component (13) is arranged in the non-limiting position.

2. Steering column according to Claim 1, **characterized in that** the pivotable component (13) is formed with a bow component.

3. Steering column according to Claim 1 or 2, **characterized in that**, in the non-limiting position, the pivotable component (13) is arranged so as to release a crash displacement path for the adjusting unit (2).

4. Steering column according to at least one of the preceding claims, **characterized in that** the pivotable component (13) is operatively connected to the adjusting element (8) via a coupling rod (12).

5. Steering column according to Claim 4, **characterized in that** a first axis of rotation (D1) for rotatable mounting of the coupling rod (12) on the adjusting element (8) and a second axis of rotation (D2) for the displacement of the adjusting element (8) between the first and the second operating position are arranged so as to be axially offset with respect to one another.

6. Steering column according to Claim 4 or 5, **characterized in that** a third axis of rotation for rotatable mounting of the coupling rod (12) on the pivotable component (13) and a fourth axis of rotation for the pivotable mounting of the pivotable component (13) between the limiting position and the non-limiting position are arranged spaced apart.

7. Steering column according to at least one of the preceding claims, **characterized in that** the second axis of rotation for the displacement of the adjusting element (8) between the operating positions and the fourth axis of rotation for the pivoting of the pivotable component (13) between the limiting position and the non-limiting position are arranged spaced apart from one another.

8. Steering column according to at least one of the preceding claims, **characterized in that** a stop portion of the pivotable component (13), on which the second stop (18) is formed, is arranged in the direction of the longitudinal axis so as to be offset with respect to the axis of rotation for the pivoting of the pivotable component (13) between the limiting position and the non-limiting position.

9. Steering column according to at least one of the preceding claims, **characterized in that** the pivotable component (13) is mounted on opposite flanges (14, 15) of the supporting unit (1) so as to be rotatable in each case.

10. Steering column according to at least one of the preceding claims, **characterized in that** the fixing device (5) has an elastically deformable element (11a) which can be compressed in order to allow a displacement of the adjusting element (8) into the third operating position.

## Revendications

1. Colonne de direction pour un véhicule automobile, comprenant
- une unité de réglage (2) avec un arbre de direction (3) monté dans un tube d'enveloppe (2a) à rotation autour de son axe longitudinal (L),
- une unité porteuse (1) pouvant être reliée à la carrosserie du véhicule automobile et dans laquelle peut être accueillie l'unité de réglage (3),
- un dispositif de calage (5), qui est permutable entre une position de libération, dans laquelle l'unité de réglage (2) est libérée pour pouvoir coulisser par rapport à l'unité porteuse (1) en vue du positionnement, et une position de calage, dans laquelle l'unité de réglage (2) est fixée par rapport à l'unité porteuse (1) jusqu'à atteindre une force de desserrage prédéfinie,
- un élément de réglage (8), qui est couplé au dispositif de calage (5) et qui est conçu pour la permutation entre la position de libération et la position de calage,
l'élément de réglage (8) pouvant être déplacé entre différentes positions opérationnelles :
- une position opérationnelle de positionnement, dans laquelle le dispositif de calage est permuté dans la position de libération, l'unité de réglage pouvant coulisser le long d'une course de positionnement par rapport à l'unité porteuse et la longueur de la course de positionnement étant limitée par une délimitation, et
- une position opérationnelle de calage, dans laquelle le dispositif de calage est permuté dans la position de calage, l'unité de réglage pouvant coulisser par rapport à l'unité porteuse après le dépassement d'une force de desserrage prédéterminée et la limitation de la course de positionnement étant supprimée,
l'élément de réglage (8) pouvant en outre être déplacé dans une position opérationnelle de rangement, dans laquelle le dispositif de calage est permuté dans la position de libération et l'unité de réglage peut coulisser par rapport à l'unité porteuse, la limitation de la course de positionnement étant supprimée, **caractérisée par**
- une première butée (17), qui est disposée au niveau de l'unité de réglage (2) ; et
- un élément structural pivotant (13), lequel est disposé au niveau de l'unité porteuse (1) et est relié fonctionnellement à l'élément de réglage (8), l'élément structural pivotant (13), lors du pivotement de l'élément de réglage (8), étant pivoté entre une position de limitation et une position de non limitation et l'élément structural pivotant (13),
- dans la position de limitation, pouvant entrer en collision avec la première butée (17) en formant une deuxième butée (18) associée à la première butée (17) et
- dans la position de non limitation, étant disposé de manière à ne pas pouvoir entrer en collision avec la première butée (17),
- dans la position opérationnelle de rangement, l'élément structural pivotant (13) étant disposé dans la position de non limitation,
- dans la position opérationnelle de positionnement, l'élément structural pivotant (13) étant disposé dans la position de limitation et
- dans la position opérationnelle de calage, l'élément structural pivotant (13) étant disposé dans la position de non limitation.

2. Colonne de direction selon la revendication 1, **caractérisée en ce que** l'élément structural pivotant (13) est formé avec un élément structural en étrier.

3. Colonne de direction selon la revendication 1 ou 2, **caractérisée en ce que** l'élément structural pivotant (13), dans la position de non limitation, est disposé de manière à libérer une course de déplacement de collision pour l'unité de réglage (2).

4. Colonne de direction selon au moins l'une des revendications précédentes, **caractérisée en ce que** l'élément structural pivotant (13) est relié fonctionnellement à l'élément de réglage (8) par le biais d'une tige de couplage (12).

5. Colonne de direction selon la revendication 4, **caractérisée en ce qu'**un premier axe de rotation (D1) pour un support à rotation de la tige de couplage (12) au niveau de l'élément de réglage (8) et un deuxième axe de rotation (D2) pour le déplacement de l'élément de réglage (8) entre la première et la deuxième position opérationnelle sont disposés avec un décalage axial l'un par rapport à l'autre.

6. Colonne de direction selon la revendication 4 ou 5, **caractérisée en ce qu'**un troisième axe de rotation pour un support à rotation de la tige de couplage (12) au niveau de l'élément structural pivotant (13) et un quatrième axe de rotation pour un support pivotant de l'élément structural pivotant (13) entre la position de limitation et la position de non limitation sont disposés espacés l'un de l'autre.

7. Colonne de direction selon au moins l'une des revendications précédentes, **caractérisée en ce que** le deuxième axe de rotation pour le déplacement de l'élément de réglage (8) entre les positions opérationnelles et le quatrième axe de rotation pour le pivotement de l'élément structural pivotant (13) entre la position de limitation et la position de non limitation sont disposés espacés l'un de l'autre.

8. Colonne de direction selon au moins l'une des revendications précédentes, **caractérisée en ce qu'**une portion de butée de l'élément structural pivotant (13), au niveau de laquelle est formée la deuxième butée (18), est disposée décalée dans la direction de l'axe longitudinal par rapport à l'axe de rotation pour le pivotement de l'élément structural pivotant (13) entre la position de limitation et la position de non limitation.

9. Colonne de direction selon au moins l'une des revendications précédentes, **caractérisée en ce que** l'élément structural pivotant (13) est monté à rotation respectivement sur des brides (14, 15) opposées de l'unité porteuse (1).

10. Colonne de direction selon au moins l'une des revendications précédentes, **caractérisée en ce que** le dispositif de calage (5) possède un élément (11a) déformable élastiquement, lequel peut être comprimé afin de permettre un déplacement de l'élément de réglage (8) dans la troisième position opérationnelle.
